# EUROPEAN PATENT APPLICATION

(11) **EP 4 418 074 A1**
(43) Date of publication of application: **21.08.2024**
(21) Application number: 23156709.0
(22) Date of filing: 15.02.2023
(51) Int. Cl.: G06F 3/01, G06F 3/16, G08C 17/02

(54) **APPARATUS, METHOD AND COMPUTER PROGRAM FOR CONTROLLING SMART DEVICES**

(71) Applicant: Nokia Technologies Oy, 02610 Espoo (FI)
(72) Inventor: CHATTERJEE, Soumyajit, Ichapur (IN); FERLINI, Andrea, Cambridge (GB); MATHUR, Akhil, London (GB)
(74) Representative: Nokia EPO representatives

(57) **Abstract**

Examples of the disclosure relate to controlling smart devices using voice commands. In examples of the disclosure a voice command is received from a user and information indicative of a gaze direction of the user is obtained. The information indicative of a gaze direction is determined from at least position information obtained from a head mounted device worn by the user and one or more physical parameters of the user and a location of the user. One or more smart devices positioned in the gaze direction of the user are identified. The location of the user can be used to identify the one or more smart devices in the gaze direction. Control of the one or more identified smart devices is enabled in accordance with the received voice command.

## Description

### TECHNOLOGICAL FIELD

Examples of the disclosure relate to apparatus, methods and computer programs for controlling smart devices. Some relate to apparatus, methods and computer programs for controlling smart devices using voice commands.

### BACKGROUND

Voice commands can be used to control smart devices. If there is more than one smart device in the area around a user it can be useful to determine which smart device the voice command is intended for.

### BRIEF SUMMARY

According to various, but not necessarily all, examples of the disclosure there is provided an apparatus comprising means for:
receiving a voice command from a user;
obtaining information indicative of a gaze direction of the user where the information indicative of a gaze direction is determined from at least position information obtained from a head mounted device worn by the user and one or more physical parameters of the user;
using at least a location of the user to identify one or more smart devices positioned in the gaze direction of the user; and
enabling control of the one or more identified smart devices in accordance with the received voice command.

The one or more physical parameters of the user may comprise one or more of: a dimension of the user's head, location of the user's glabella, user's height.

One or more of the physical parameters of the user may be stored in a user profile wherein at least information stored in the user profile is used to determine the gaze direction.

One or more of the physical parameters of the user may be obtained from a dimension of a smart glass device being worn by the user.

Position information obtained from the head mounted device may be collected from one or more inertial measurement units in the head mounted device.

The means may be for determining a location of the user and using the location of the user to determine a gaze direction of the user.

The means may also be for using a map indicating locations of the one or more smart devices to identify the one or more smart devices positioned in the gaze direction of the user.

The one or more smart devices identified as being positioned in the gaze direction of the user may comprise a plurality of smart devices and the means may also be for selecting one of the identified smart devices.

The smart device may be selected based on a voice power level computed from the received voice command.

The means may also be for confirming that the voice command provides an appropriate control for the identified smart device.

According to various, but not necessarily all, examples of the disclosure there is provided a device comprising an apparatus as described herein, wherein the device is at least one of; a server, a head mounted device, an earphone, smart glasses, a microphone array.

According to various, but not necessarily all, examples of the disclosure there is provided a method comprising:
receiving a voice command from a user;
obtaining information indicative of a gaze direction of the user where the information indicative of a gaze direction is determined from at least position information obtained from a head mounted device worn by the user and one or more physical parameters of the user;
using at least a location of the user to identify one or more smart devices positioned in the gaze direction of the user; and
enabling control of the one or more identified smart devices in accordance with the received voice command.

According to various, but not necessarily all, examples of the disclosure there is provided a computer program comprising program instruction which, when executed by an apparatus, cause the apparatus to perform:
receiving a voice command from a user;
obtaining information indicative of a gaze direction of the user where the information indicative of a gaze direction is determined from at least position information obtained from a head mounted device worn by the user and one or more physical parameters of the user;
using at least a location of the user to identify one or more smart devices positioned in the gaze direction of the user; and
enabling control of the one or more identified smart devices in accordance with the received voice command.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION

Some examples will now be described with reference to the accompanying drawings in which:
FIG. 1 shows an example system;
FIG. 2 shows an example method;
FIG. 3 shows an example method; and
FIG. 4 shows an example apparatus.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Corresponding reference numerals are used in the figures to designate corresponding features. For clarity, all reference numerals are not necessarily displayed in all figures.

### DETAILED DESCRIPTION

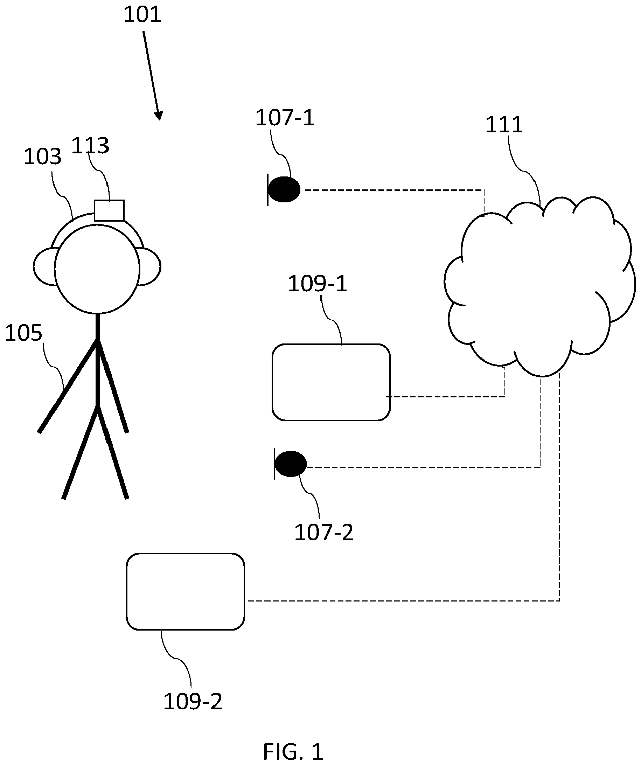

Fig. 1 shows an example system 101 that can be used to implement examples of the disclosure. The system 101 comprises a head mounted device 103, a plurality of microphones 107, one or more smart devices 109 and a server 111. Only parts of the system 101 that are referred to in the following description have been shown in Fig.1. the system 101 could comprise additional components.

The head mounted device 103 can comprise an electronic device that a user 105 wears on their head. The head mounted device 103 can be worn on the user's head so that the user's head bears the weight, or at least partially bears the weight, of the head mounted device 103.

In some examples the head mounted device 103 could comprise earphones. The earphones can be worn by a user 105 so as to provide audio signals to the user's ears. The earphones can be worn in a user's ear, for example the earphones could comprise ear bud devices. In some examples the earphones could be worn over a user's ear. For instance, they could comprise head phones or headsets.

In some examples the head mounted device 103 could comprise a smart glasses device. The smart glasses device could comprise a near eye display or other means that is configured to provide images to a lens or other surface positioned over a user's eyes or lose to a user's eyes. The images could comprise augmented reality and/or virtual reality content for the user 105 or any other suitable type of content.

In some examples the head mounted device 103 can comprise both earphones and smart glasses. For instance, the head mounted device 103 could comprise a virtual reality helmet or other suitable type of head mounted device 103.

The head mounted devices 105 can comprise one or more positioning sensors 113. The positioning sensors 113 can be used to determine an orientation of a user's head and/or to determine a location of a user 109 within an area. The positioning sensors 109 could comprise an inertial measurement unit or any other suitable means. The inertial measurement unit could comprise one or more of accelerometers, gyroscopes, magnetometers and/or any other suitable type of sensors or combinations of sensors. The inertial measurement unit could comprise a six degrees of freedom inertial measurement unit, a nine degrees of freedom inertial measurement unit, or any other suitable type of sensors or combinations of sensors.

The system 101 can comprise a plurality of microphones 107. In the example of Fig. 1 two microphones 107-1 and 107-2 are shown but the system 101 could comprise more than two microphones 107 in other examples. The plurality of microphones 107 can be configured in an array or in any other suitable arrangement. The plurality of microphones 107 can be positioned relative each other so that the directional components of the sound signals can be determined. The plurality of microphones 107 can be positioned relative each other so that a location of a sound source can be estimated from spatial information comprised within the sound signals detected by the microphones 107. For instance, if the microphones 107 detect a voice command from the user then the differences between sound signals detected by the respective microphones 107 can be used to estimate a location of the user 105.

The microphones 107 can comprise any means that can be configured to detect sound signals and convert the detected sound signal into audio signals. The sound signals that are detected by the microphones 107 can comprise voice commands from the user 105 and/or any other suitable sound signals.

In the example of Fig. 1 the microphones 107 are shown separate to the smart devices 109 and the head mounted device 103. In other examples one or more of the microphones 107 could be part of a smart device 109 or any other suitable part of the system 101.

The system 101 can also comprise one or more smart devices 109. In the example of Fig. 1 two smart devices 109 are shown. In the example of Fig. 1 two smart devices 109-1 and 109-2 are shown but the system 101 could comprise more than two smart devices 109 in other examples. Other numbers of smart devices 109 could be within the system 101 in other examples.

The smart devices 109 can comprise devices that can be configured to perform functions in response to a control input that is not applied directly to the smart device 109. The function or functions that are performed by the smart device 109 are dependent upon the type of smart device 109. Different smart devices 109 could perform different functions. The smart devices 109 could comprise a television, a sound system, a lighting system, a heating system, a household appliance or any other suitable type of device.

The smart devices 109 are configured to enable a communication connection to be established. The communication connection can enable the respective smart devices 109 to be connected to one or more other devices. The communication connection can enable the respective smart devices 109 to be connected to any other suitable part of the system 101. The communication connection can enable the smart device 109 to receive the control inputs from other devices. This can enable a user 105 to control the smart devices 109 remotely without direct contact with the smart device 109 itself.

The communication connections between the smart devices 109 and the other parts of the system 101 could be any suitable type of communication connection. The communication connection could be a wireless communication connection or a wired communication connection. The smart devices 109 could be part of an internet of things or could be part of any other suitable network.

The system 101 also comprises a server 111. The server 111 can be configured to enable control of, at least part of, the system 101. For instance, the server 111 could be configured to enable control inputs to be provided to one or more of the smart devices 109. For example, the server 111 can be coupled to the smart devices 109 and/or the microphones 107 via one or more communication connections. The server 111 can be configured to receive control inputs from the one or more microphones 107 and enable control signals to be provided to the one or more smart devices 109 so as to enable remote control of the smart devices 109.

The server 111 could be located remotely to the microphones 107 and the smart devices 109. For instance, the server 111 need not be in the same room as the microphones 107 or the smart devices 109 but could be connected to the microphones 107 and the smart devices via an internet connection or other suitable means. In some examples the server 111 could be located in the same area as the microphones 107 and the smart devices 109. In some examples the server 111 could be part of a smart device 109 or any other part of the network 101.

In the example system 101 of Fig.1 a user 105 can control the smart devices 109 by making voice command. The voice command can be detected by the one or more microphones 107 and used to provide a control signal to the appropriate smart devices 109. If there is more than one smart device 109 in the vicinity of the user 105 it might not be clear which smart device 109 the voice command is intended to control. This could lead to the wrong smart device 109 being controlled and/or could require further inputs from the user 105 to indicate which smart device 109 they are trying to control or could lead to the wrong functions being activated. This could be inconvenient for the user 105.

Examples of the disclosure address this issue. In examples of the disclosure position information form the head mounted device 103 can be used to determine a gaze direction of the user 105 and then one or more smart devices 109 within the gaze direction can be identified and assumed to be the smart device 109 for which the command was intended.

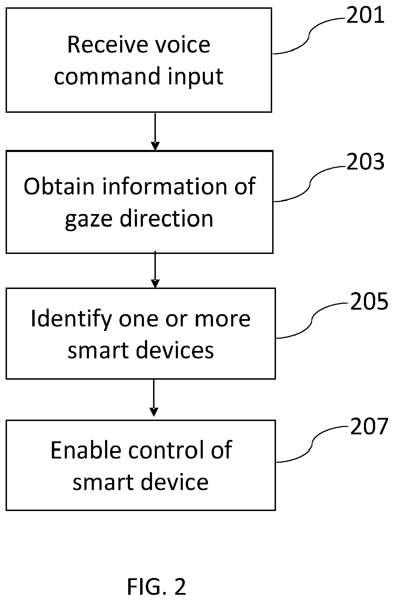

Fig. 2 shows an example method. The method could be performed by part of the system 101 shown in Fig. 1. For example, the method could be implemented by the server 103, the microphones 107, the smart devices 109, the head mounted device 103 or any other suitable part of the system 101. In some examples different parts of the method could be performed by different parts of the system 101.

The method comprises, at block 201, receiving a voice command from a user 105. The user 105 can be a user 105 who is wearing a head mounted device 103.

The voice command can comprise an instruction for one or more of the smart devices 109 in the system 101. The voice command can be detected by one or more of the microphones 107 within the system 101.

At block 203 the method comprises obtaining information indicative of a gaze direction of the user 105. The gaze direction can be more specific than a general direction in which the user might be facing. The gaze direction can be a vector that passes through a mid-point of the user's head. The gaze direction can be substantially perpendicular to the user's face.

The gaze direction is determined from at least position information obtained from the head mounted device 103 worn by the user 105 and one or more physical parameters of the user 105 and a location of the user 105. The position information can be obtained from one or more sensors within the head mounted device 103 and/or from any other suitable sensors or means. The sensors could comprise positioning sensors 113 such as one or more inertial measurement units. The inertial measurement units can be positioned in or on the head mounted device 103.

The one or more physical parameters of the user 105 could comprise information relating to the height of the user 105, information relating to a dimension of the user's head and/or face, information indicative of the location of the user's glabella and/or any other suitable information. The one or more physical parameters of the user 105 could be stored within the system 101 and retrieved as appropriate. The one or more physical parameters could be stored in a user profile. The information stored in the user profile can then be used to determine the gaze direction. In some examples information that is not stored in the user profile can also be used to determine the gaze direction. For example, some information can be obtained from sensors or other sources and need not be stored to the user profile.

In some examples one or more of the physical parameters of the user 105 can be obtained from the head mounted device 103. For instance, if the head mounted device 103 is a smart glasses device then the dimensions of a near eye display can give an indication of the width of the user's face and so can provide an indication of the dimension of the user's head and/or the location of the glabella.

In some cases, the head mounted device 103 could comprise a smart glasses device and also comprise one or more positioning sensors 103. In such cases both the position information and the one or more physical parameters of the user 105 could be obtained from the same device.

In some examples a location of the user 105 could be used to determine the gaze direction. The location of the user 105 could be determined using the positioning sensors 113 of the head mounted device 103 or by using any other suitable means.

In some examples additional information could also be used to determine the gaze direction of the user 105.

At block 205 the method comprises identifying one or more smart devices 109 positioned in the gaze direction of the user 105. The location of the user 105 can be used to identify the one or more smart devices 109 positioned in the gaze direction of the user 105.

Any suitable information or means can be used to identify the one or more smart devices 109 that are positioned in the gaze direction of the user 105. For instance, a map indicating locations of the one or more smart devices 109 can be used. The map could be stored in the server 111 or in any other suitable part of the system 101. The map could be a virtual map or a digital twin environment or any other suitable type of map. The locations of one or more of the smart devices 109 could be determined using radio frequency positioning, acoustic positioning or any other suitable process. In some examples one or more of the smart devices 109 could have a fixed position. For instance, if the smart device 109 is a household appliance such as a washing machine this would not move and so information about the location of this smart device 109 could be stored and retrieved as appropriate.

The location of the user 105 can also be used to identify one or more smart devices 109 positioned in the gaze direction of the user 105. Any suitable means could be used to determine the location of the user 105. In some examples the voice command detected by the plurality of microphones can be used to determine a location of the user 105.

In some examples there might only be a single smart device 109 that is aligned with the gaze direction of the user 105. In such cases the single smart device 109 that is aligned with the gaze direction of the user 105 would be identified as the smart device 109 for which the voice command was intended.

In some examples there might be more than one smart device 109 that is aligned with the gaze direction of the user 105. In such cases one of the smart devices 109 can be selected from the plurality of smart devices 109 that are aligned with the gaze direction of the user 105.

Any suitable means or process can be used to select one of the smart devices 109 that have been identified as being positioned in the gaze direction of the user 105. For example, a smart device 109 could be selected based on a voice power level. The voice power level could be computed from the received voice command.

At block 207 the method comprises enabling control of the one or more identified smart devices 109 in accordance with the received voice command.

In some examples a check can be performed to confirm that the voice command provides an appropriate control for the identified smart device 109. For instance, if the identified smart device 109 is a television then a voice command controlling volume would be appropriate would make sense, but if the identified smart device 109 is a lighting system then a voice command controlling volume would not make sense. If the voice command is not appropriate for the identified smart device 109 then the voice command would not be enabled. An error message could be provided to the user 105 or a different smart device 109 could be identified. If the voice command is appropriate then the voice command could be enabled. An appropriate control input would be sent to the identified smart device 109.

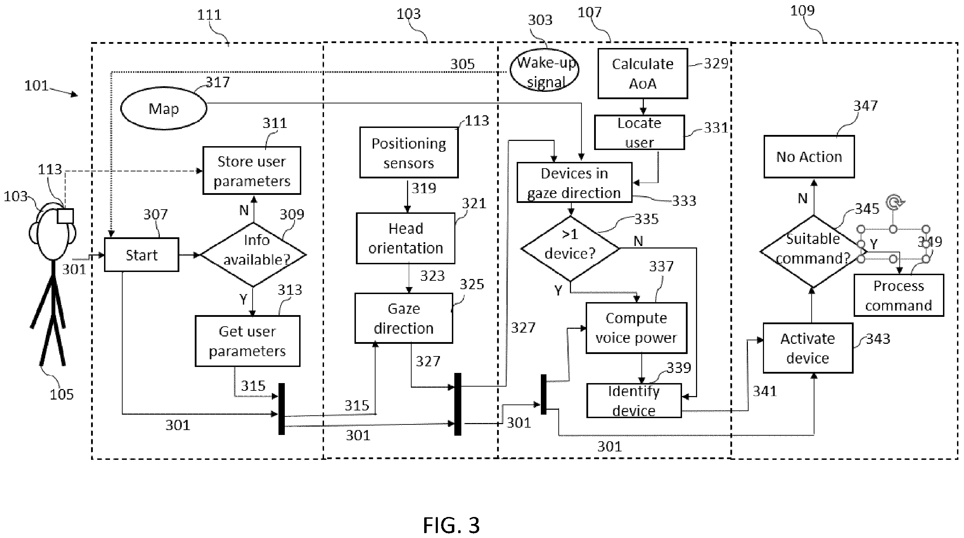

Fig. 3 shows another example method and parts of the system 101 that could perform the respective parts of the method. The respective parts of the method could be performed by other parts of the system 101 in other examples. The system 101 comprises a server 111, a head mounted device 103, a plurality of microphones 107 and a plurality of smart devices 109. These could be as shown in Fig. 1. Other types of devices and components of the system 101 could be used in other examples.

In the example of Fig. 3 a user 105 is wearing a head mounted device 103. The head mounted device 105 could comprise ear phones, smart glasses or any other suitable type of head mounted device 103.

The head mounted device comprises positioning sensors 113. The positioning sensors 113 are shown schematically in Fig. 3. The positioning sensors 113 could be provided in any suitable part of the head mounted device 103. For instance, if the head mounted device 103 comprises earphones or other in ear devices then the positioning sensors 113 would be positioned in the earphones so that in use the positioning sensors 113 are positioned in the user's ears.

The user 105 makes a voice command 301. The voice command 301 can comprise an instruction for one or more of the smart devices 109 in the system 101. For example, the voice command could comprise an instructions to start a function, to stop a function or to change how a function is being performed. For instance, if the smart devices 105 comprises a television or device that provides media content to a user the user 105 could make a voice command to turn the smart device 109 on, a command to turn the smart device on 109 or a command to change the content being provided by the smart device 109.

The voice command 301 does not need to identify the smart device 109 that is to perform the function. For instance, the voice command 301 could simply comprise an instruction and the system 101 is configured to identify which smart device 109 is to perform the function.

The voice command 301 can be detected by one or more of the microphones 107 within the system 101.

In some examples the voice command 301 can comprise a wake-up word or signal. When this wake-up word or signal is detected the system 101 or specific parts of the system 101 can enter an active mode.

The voice command or other wake-up signal can be detected by the microphones 107 at block 303. In response to detecting the wake-up signal the microphones 107 send a control signal 305 to the server 111. The control signal 305 causes the server 111, at block 307, to start the process of identifying which smart device 109 the voice command 301 was intended for.

At block 309 it is determined whether the information that is needed by the system 101 to enable the smart device 109 to be identified is available. In this example it can be determined whether the physical parameters of the of the user 105 are available. The physical parameters of the user 105 could comprise information relating to the height of the user 105, information relating to a dimension of the user's head and/or face, information indicative of the location of the user's glabella and/or any other suitable information.

If the physical parameters of the user are not available then, at block 311, the physical parameters of the user 105 are measured or otherwise obtained and then stored.

If the physical parameters of the user 105 are not available then they can be obtained through appropriate measurements of the respective parts of the user 105. In some examples one or more of the physical parameters of the user 105 can be obtained from the head mounted device 103. For instance, if the head mounted device 103 comprises a smart glasses device then the width of the smart glasses would correspond to the width of the user's head. Information indicative of the width of the user's head, and/or any other related parameter, could therefore be obtained from information relating to the width of the smart glasses. This could avoid making measurements of the user 105.

Once the physical parameters of the user 105 have been measured or otherwise obtained the physical parameters of the user 105 can be stored in a user profile or in any other suitable format. The user profile can then be accessed as appropriate so that the measurements of the user 105 do not need to be repeated every time the system 101 is used. The physical parameters of the user 105 can be stored at the server 111 or at any other suitable location.

If, at block 309, it is determined that the physical parameters of the user 105 are available then, at block 313, the physical parameters of the user 105 are retrieved from the relevant storage location.

In some examples the system 101 could be configured so that multiple different users 105 could use the system 101. In such cases multiple different user profiles storing the relevant physical parameters of the respective users 105 can be stored. The correct user profile could be identified based on the voice command 301 or any other suitable input. The physical parameters of the user 105 could then be retrieved based on the identification of the user.

Once the physical parameters of the user 105 have been obtained the relevant physical parameters of the user 105 can be used by the system 101 to enable the user's gaze direction to be determined.

In this case the user's gaze direction can be determined by the head mounted device 103. In other examples the user's gaze direction could be determined by the server 111 or any other suitable part of the system 101.

In the example of Fig. 3 information indicative of the physical parameters 315 and the voice command 301 are provided from the server 111 to the head mounted device 103. This information could be provided via any suitable communication link.

In the example of Fig. 3 the server 111 is also configured to store a map 317. The map 317 comprises information relating to the location of the smart devices 109 of the system 101. The locations of the smart devices 109 could be obtained using any appropriate techniques such as acoustic localization, radio frequency localization, or any other suitable techniques. For instance, if the smart devices communicate using a standard protocol such as BLE (Bluetooth Low Energy), Zigbee or Wi-Fi then these protocols comprise processes for radio frequency localization using the channel state information and the angle of arrival (AoA) of signals during communication. Similarly, if the smart devices 109 generate sound during use then the sound signals could be used for acoustic localization. The sound signals could be caused by vibrations of the smart device 109 or vibrations of parts of the smart devices 109 or by any other suitable means. Other means and/or processes for locating the smart devices 109 could be used in other examples of the disclosure.

The map 317 or other information about the location of the smart devices 109 can be obtained at any suitable time. The information can be obtained before the voice command 301 is made so that the map 317 is stored in the server 111 and can be retrieved as appropriate when the voice command 301 is made. In such examples the information about the location of the smart devices 109 could be obtained during an initialization phase or at regular intervals or in response to an indication that one or more of the smart devices 109 has moved.

In the example of Fig. 3 the head mounted device 103 is configured to compute the gaze direction of the user 105. The positioning sensors 113 of the head mounted device 103 provide sensor data 319. The sensor data 319 can be collected at the time the voice command 301 was made so that the sensor data 319 corresponds to the position of the user's head at the time the user 105 made the voice command 301.

At block 321 the sensor data 319 from the positioning sensors 113 is used to determine the head orientation of the user 105. The head orientation of the user 105 is a direction that the users head is facing towards.

Once the head orientation has been determined, information indicative of the head orientation 323 is provided as an output.

At block 325 the information indicative of the head orientation 323 and the information indicative of the physical parameters 315 are used to compute a gaze direction of the user 105.

The gaze direction gives a more specific indication of the direction that the user 105 is looking in compared to the head orientation. The gaze direction takes into account factors such as the height of the user 105 and the position of their eyes to define a vector G that indicates the gaze direction of the user 105. Therefore, different users 105 having different physical parameters would have different gaze directions for the same head orientation.

In some examples the vector G that defines the gaze direction can be taken as being a vector passing through the middle of the width of the user's head, approximately through the glabella, and approximately perpendicular to the user's forehead. The location of the user's glabella and forehead can be determined from the physical parameters of the user 105.

Once the gaze direction has been computed the gaze direction 327 is provided as an output from the head mounted device 103. The gaze direction 327 can be provided to a device comprising the microphones 107 to enable the smart device 109 for which the voice command 301 was intended to be identified.

The microphones 107 can be part of a microphone array or any other suitable device. In this example a device comprising the microphones 107 can be configured to determine a location of the user 105. In this example a device comprising the microphones 107 can use acoustic localization techniques to determine a location of the user 105. For instance, at block 319 the angle of arrival of the voice command 301 as detected by the respective microphones 107 is determined. Any suitable techniques can be used to determine the angle of arrival of the voice command 301. The techniques can take into account different multipath reflected signals. The techniques can also take into account additional information such as the height of the user 105. The height of the user 105, or any other relevant information, can be obtained from a user profile stored in the server 111 or from measurements made and stored at block 311.The angle of arrival for different microphones 107 within the system 101 can then be used, at block 331, to determine the location L of the user 105.

At block 333 smart devices 109 that are positioned in the gaze direction of the user 105 can be identified. The gaze direction 327, the map 317 and the location of the user 105 can all be used to determine which smart devices 109 are positioned in the gaze direction 327. For example, the location L of the user 105 and the gaze direction G can be combined to determine a precise direction of view for the user 105. This can then be combined with information about the location of the smart devices 109 from the map 317 to identify one or more smart devices 109 that are positioned in the gaze direction of the user 105.

At block 335 it is determined whether a single smart device 109 is positioned in the gaze direction of the user 105 or if multiple smart devices 109 are positioned in the gaze of the user 105.

If there is only a single smart device 109 positioned in the gaze direction of the user 105 then the process proceeds to block 339 and the single smart device 109 is identified as the smart device 109 for which the voice command 301 was intended.

If there are a plurality of smart devices 109 positioned in the gaze direction of the user 105 then the process proceeds to block 337 and one of the smart devices 109 can be selected. Any suitable means or processes can be used to select one of the smart devices 109 from the plurality that are positioned in the gaze direction. In this example the voice power in the voice command 301 can be used. For instance, the energy in the voice command 301 can be determined. The attenuation of the voice command 301 due to the air and the distance the voice command 301 travels through the air can also be computed. A distance from the user 105 for which the voice command 301 remains above a threshold energy T is then determined. The smart device 109 which is furthest from the user 105 but still within this energy threshold distance from the user 105 can then be selected. The use of the energy in the voice command 301 to select one of the smart devices 109 from a plurality of smart devices 109 has the benefit that it makes use of the original voice command 301 and does not require any further inputs from the user 105 and also does not require any additional or specific hardware within the system 101. Other processes for selecting a smart device 109 from a plurality of smart devices 109 could be used in other examples.

Once a smart device 109 has been selected from the plurality of smart devices 109 the process proceeds to block 339 and the selected smart device 109 is identified as the smart device 109 for which the voice command 301 was intended.

Once the smart device 109 for which the voice command 301 was intended has been identified a control signal 341 and the voice command 301 are transmitted to the identified smart device 109. The control signal 341 can enable control of the identified smart device 109 in accordance with the voice command 301. The control signal 341 and the voice command 301 can be sent via any suitable communication link.

In some examples control signals could also be sent to one or more other smart devices 109 that have not been selected. The control signals sent to the smart devices 109 that have not been selected can indicate that no response is needed from the smart devices 109 that have not been selected and/or can control the smart devices 109 that have not been selected to ignore the voice command 301.

In response to the control signal 341 the identified smart device 109 is activated at block 343. Once the smart device 109 has been activated, then, at block 345 it can be confirmed whether the voice command 301 provides an appropriate control for the identified smart device 109. Whether a voice command 301 is appropriate can be determined based on the functions referred to in the voice command 301 and the functions that the identified smart device 109 can perform. For instance, it would not be appropriate to request a washing machine to turn a light on.

If the command is not appropriate then the process proceeds to block 347 and no action is taken by the identified smart device 109. In some cases an output could be provided by the identified smart device 109, or any other suitable part of the system 101 to indicate to the user that the command has not been accepted. The output could be an audible or visual output. The output could comprise an error message or any other suitable information. This could then enable the user 105 to make another voice command 301 or to change the direction that they are looking when they make the voice command 301.

If the command is appropriate then the process proceeds to block 349 and the identified smart device 109 processes the command. This could cause the identified smart device 105 to start performing a function, to change a function being performed or to end a function being performed, in accordance with the voice command 301.

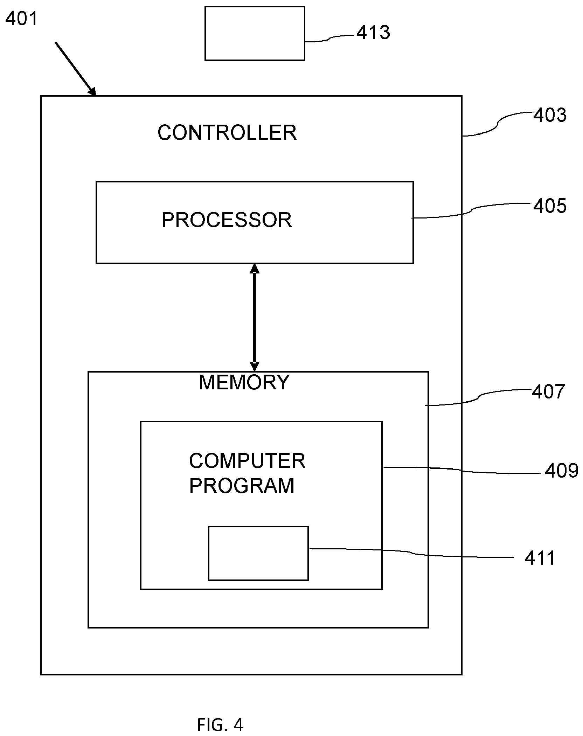

Fig. 4 schematically illustrates an apparatus 401 that can be used to implement examples of the disclosure. In this example the apparatus 401 comprises a controller 403. The controller 403 can be a chip or a chip-set. The apparatus 401 can be provided within any suitable part of the system 101 such as the server 111, a head mounted device 103, an array of microphones 107 or a smart device 109 or any other suitable part of a system 101.

In the example of Fig. 4 the implementation of the controller 403 can be as controller circuitry. In some examples the controller 403 can be implemented in hardware alone, have certain aspects in software including firmware alone or can be a combination of hardware and software (including firmware).

As illustrated in Fig. 4 the controller 403 can be implemented using instructions that enable hardware functionality, for example, by using executable instructions of a computer program 409 in a general-purpose or special-purpose processor 405 that may be stored on a computer readable storage medium (disk, memory etc.) to be executed by such a processor 405.

The processor 405 is configured to read from and write to the memory 407. The processor 405 can also comprise an output interface via which data and/or commands are output by the processor 405 and an input interface via which data and/or commands are input to the processor 405.

The memory 407 stores a computer program 409 comprising computer program instructions (computer program code) that controls the operation of the controller 403 when loaded into the processor 405. The computer program instructions, of the computer program 409, provide the logic and routines that enables the controller 403. to perform the methods illustrated in the accompanying Figs. The processor 405 by reading the memory 407 is able to load and execute the computer program 409.

The apparatus 401 comprises:
at least one processor 405; and
at least one memory 407 storing instructions that, when executed by the at least one processor 405, cause the apparatus 401 at least to perform:
   receiving 201 a voice command 301 from a user 105;
   obtaining 203 information indicative of a gaze direction of the user 105 where the information indicative of a gaze direction is determined from at least position information obtained from a head mounted device 103 worn by the user 105 and one or more physical parameters of the user 105;
   identifying 205 one or more smart devices 109 positioned in the gaze direction of the user 105; and
   enabling control 207 of the one or more identified smart devices 109 in accordance with the received voice command 301.

As illustrated in Fig. 4, the computer program 409 can arrive at the controller 403 via any suitable delivery mechanism 413. The delivery mechanism 413 can be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 409. The delivery mechanism can be a signal configured to reliably transfer the computer program 409. The controller 403 can propagate or transmit the computer program 409 as a computer data signal. In some examples the computer program 409 can be transmitted to the controller 403 using a wireless protocol such as Bluetooth, Bluetooth Low Energy, Bluetooth Smart, 6LoWPan (IPᵥ6 over low power personal area networks) ZigBee, ANT+, near field communication (NFC), Radio frequency identification, wireless local area network (wireless LAN) or any other suitable protocol.

The computer program 409 comprises computer program instructions for causing an apparatus 401 to perform at least the following or for performing at least the following:
receiving 201 a voice command 301 from a user 105;
obtaining 203 information indicative of a gaze direction of the user 105 where the information indicative of a gaze direction is determined from at least position information obtained from a head mounted device 103 worn by the user 105 and one or more physical parameters of the user 105;
identifying 205 one or more smart devices 109 positioned in the gaze direction of the user 105; and
enabling control 207 of the one or more identified smart devices 109 in accordance with the received voice command 301.

The computer program instructions can be comprised in a computer program 409, a non-transitory computer readable medium, a computer program product, a machine readable medium. In some but not necessarily all examples, the computer program instructions can be distributed over more than one computer program 409.

Although the memory 407 is illustrated as a single component/circuitry it can be implemented as one or more separate components/circuitry some or all of which can be integrated/removable and/or can provide permanent/semi-permanent/ dynamic/cached storage.

Although the processor 405 is illustrated as a single component/circuitry it can be implemented as one or more separate components/circuitry some or all of which can be integrated/removable. The processor 405 can be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory or memories that work together to cause an apparatus, such as a mobile phone or server, to perform various functions and
(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in Figs. 2 and 3 can represent steps in a method and/or sections of code in the computer program 409. The illustration of a particular order to the blocks does not necessarily imply that there is a required or preferred order for the blocks and the order and arrangement of the blocks can be varied. Furthermore, it can be possible for some blocks to be omitted.

The algorithms hereinbefore described may be applied to achieve technical effects of determining which smart device a user is intended to control using a voice command. The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or `the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or `the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising means for:
receiving a voice command from a user;
obtaining information indicative of a gaze direction of the user where the information indicative of a gaze direction is determined from at least position information obtained from a head mounted device worn by the user and one or more physical parameters of the user;
using at least a location of the user to identify one or more smart devices positioned in the gaze direction of the user; and
enabling control of the one or more identified smart devices in accordance with the received voice command.

2. An apparatus as claimed in claim 1 wherein the one or more physical parameters of the user comprise one or more of: a dimension of the user's head, location of the user's glabella, user's height.

3. An apparatus as claimed in any preceding claim wherein one or more of the physical parameters of the user are stored in a user profile wherein at least information stored in the user profile is used to determine the gaze direction.

4. An apparatus as claimed in any preceding claim wherein one or more of the physical parameters of the user are obtained from a dimension of a smart glass device being worn by the user.

5. An apparatus as claimed in any preceding claim wherein the position information obtained from the head mounted device is collected from one or more inertial measurement units in the head mounted device.

6. An apparatus as claimed in any preceding claim wherein the means are for determining a location of the user and using the location of the user to determine a gaze direction of the user.

7. An apparatus as claimed in any preceding claim wherein the means are also for using a map indicating locations of the one or more smart devices to identify the one or more smart devices positioned in the gaze direction of the user.

8. An apparatus as claimed in any preceding claim wherein the one or more smart devices identified as being positioned in the gaze direction of the user comprise a plurality of smart devices and the means are also for selecting one of the identified smart devices.

9. An apparatus as claimed in claim 8 wherein the smart device is selected based on a voice power level computed from the received voice command.

10. An apparatus as claimed in any preceding claim wherein the means are also for confirming that the voice command provides an appropriate control for the identified smart device.

11. A device comprising an apparatus as claimed in any preceding claim wherein the device is at least one of; a server, a head mounted device, an earphone, smart glasses, a microphone array.

12. A method comprising:
receiving a voice command from a user;
obtaining information indicative of a gaze direction of the user where the information indicative of a gaze direction is determined from at least position information obtained from a head mounted device worn by the user and one or more physical parameters of the user;
using at least a location of the user to identify one or more smart devices positioned in the gaze direction of the user; and
enabling control of the one or more identified smart devices in accordance with the received voice command.

13. A method as claimed in claim 12 wherein the one or more physical parameters of the user comprise one or more of: a dimension of the user's head, location of the user's glabella, user's height.

14. A computer program comprising program instruction which, when executed by an apparatus, cause the apparatus to perform:
receiving a voice command from a user;
obtaining information indicative of a gaze direction of the user where the information indicative of a gaze direction is determined from at least position information obtained from a head mounted device worn by the user and one or more physical parameters of the user;
using at least a location of the user to identify one or more smart devices positioned in the gaze direction of the user; and
enabling control of the one or more identified smart devices in accordance with the received voice command.

15. A computer program as claimed in claim 14 wherein the one or more physical parameters of the user comprise one or more of: a dimension of the user's head, location of the user's glabella, user's height.
